# EUROPÄISCHE PATENTSCHRIFT

(11) **EP 1 074 826 B1**
(45) Veröffentlichungstag und Bekanntmachung des Hinweises auf die Patenterteilung: **05.03.2008**
(21) Anmeldenummer: 00116351.8
(22) Anmeldetag: 28.07.2000
(51) Int. Cl.: G01L 3/10, G01L 3/14

(54) **Drehmomentsensor**
Torque sensor
Capteur de couple

(30) Priorität: 02.08.1999 DE 19936293
(43) Veröffentlichungstag der Anmeldung: 07.02.2001
(73) Patentinhaber: Hottinger Baldwin Messtechnik GmbH, 64293 Darmstadt (DE)
(72) Erfinder: Nold, Werner, 64560 Riedstadt (DE); Andrae, Jürgen, 64331 Weiterstadt (DE); Kreuzer, Manfred, 64331 Weiterstadt (DE)
(74) Vertreter: Behrens, Helmut

(56) Entgegenhaltungen:
- DE-C- 4 430 503
- PATENT ABSTRACTS OF JAPAN vol. 018, no. 609 (P-1828), 18. November 1994 (1994-11-18) & JP 06 229853 A (KYOWA ELECTRON INSTR CO LTD), 19. August 1994 (1994-08-19)
- PATENT ABSTRACTS OF JAPAN vol. 1995, no. 11, 26. Dezember 1995 (1995-12-26) & JP 07 229802 A (KYOWA ELECTRON INSTR CO LTD), 29. August 1995 (1995-08-29)
- PATENT ABSTRACTS OF JAPAN vol. 1998, no. 04, 31. März 1998 (1998-03-31) & JP 09 318469 A (FANUC LTD), 12. Dezember 1997 (1997-12-12)

## Beschreibung

Die Erfindung betrifft einen Drehmomentsensor gemäß Oberbegriff des Patentanspruchs 1.

Drehmomentsensoren werden in vielen Bereichen in der Industrie und der Forschung eingesetzt und müssen daher unterschiedlichen Anforderungen genügen. Um den verschiedenen Einsatzbereichen, Einbauverhältnissen und Genauigkeitsanforderungen gerecht zu werden, existieren eine Vielzahl von bekannten Drehmomentsensoren.

Es sind sogenannte Drehmomentmeßwellen mit Anschlußflanschen bekannt, die als Voll- oder Hohlwellen ausgebildet sein können, die eine auf Torsion beanspruchte Meßfeder aufweisen. Nachteilig bei derartigen Drehmomentsensoren ist jedoch die große axiale Baulänge derartiger Meßwellen, sowie der konstruktive Aufwand zur Verringerung von Biegemomenten und Querkrafteinflüssen. Weiterhin besitzen derartige Meßwellen eine geringe Torsionssteifigkeit, geringe Radialsteifigkeit sowie eine geringe Axialsteifigkeit.

Aus der DE 42 08 522 ist ein Drehmomentsensor bekannt, der zwei Anschlußflansche zum Ein- bzw. Ausleiten von Drehmomenten aufweist, wobei ein Flansch als Innennabe ausgebildet ist, die von dem zweiten konzentrisch angeordneten Flansch radial umgeben ist. Die beiden Flansche sind über mehrere symmetrisch angeordnete Kraftübertragungselemente miteinander verbunden, wobei die Kraftübertragungselemente mit den entsprechend applizierten Meßwertgebern Scherkraftaufnehmer bilden. Durch die koaxial ineinander liegende Anordnung der Flansche ist der Drehmomentsensor zwar axial sehr kurzbauend, ist jedoch im Bezug auf seine radiale Ausdehnung sehr groß, wodurch der Drehmomentsensor ein großes Massenträgheitsmoment aufweist. Da die Drehmomente auch über den inneren Flansch übertragen werden müssen, ist der äußere Flansch hinsichtlich seiner Abmessungen überdimensioniert. Bei derartigen Drehmomentsensoren hat man weiterhin festgestellt, daß bei hohen Drehzahlen eine Verschiebung des Nullpunktes auftritt, zumal die maximal mögliche Drehzahl durch die Anordnung der Meßwertgeber und die dadurch auf die Meßwertgeber und die elektrische Verschaltung wirkenden Fliehkräfte beschränkt ist.

Bei einem aus der EP 0 575 634 bekannten Drehmomentsensor sind die Verformungsbereiche in sich radial oder axial zwischen zwei Anschlußflanschen erstreckenden Stegen angeordnet, wobei die Stege mit den entsprechend applizierten Meßwertgebern Biegekraftaufnehmer bilden. Die Meßwertgeber sind über eine Brükkenschaltung derart miteinander verbunden, daß der Einfluß der Verschraubungskräfte sowie eine unterschiedliche Momenteneinleitung kompensiert werden. Es hat sich jedoch gezeigt, daß bei derartigen Drehmomentsensoren bei der Messung von Biegedehnungen zusätzlich Einflüsse von Längs- und Querkräfte auftreten. Ein weiterer Nachteil besteht darin, daß bei hohen Drehzahlen große Zentrifugalkräfte auf die Meßwertgeber wirken, die zu Meßungenauigkeiten führen.

Aus der DE 195 25 231 ist weiterhin ein Drehmomentsensor bekannt, der zwei axial beabstandete Flansche, die über mehrere Stege miteinander verbunden sind, aufweist. Die Stege weisen Scherkraftmeßwertaufnehmer auf, die auf einer gemeinsamen zu den Flanschen koaxialen Zylinderfläche angeordnet sind. Die Stege sind dabei Teile eines Ringes, der einstückig mit den Flanschen ausgebildet ist. Der Ring ist durch zwischen den Stegen eingebrachte schmale, parallel zu den Flanschflächen verlaufende Schlitze aufgetrennt, die endseitig Querabschnitte aufweisen.

Aus der DE 44 30 503 C1 ist ein weiterer Drehmomentsensor mit einer Drehmomentmessstreifenanordnung bekannt. Bei diesem Drehmomentsensor sind zwei gegenüberliegende Scheibenkörper vorgesehen, die jeweils einen beabstandeten Flansch zur Drehmomentein- und Drehmomentausleitung darstellen. Diese beiden Scheibenkörper sind mit einem kurzen rohrförmigen inneren Drehmomentübertragungsteil verbunden. Zur Drehmomenterfassung enthält einer der Scheibenkörper einen radialen kreisringförmigen Bereich mit vergleichsweise geringer axialer Dicke auf dessen radialer Außenfläche Scherkraftaufnehmer appliziert sind, die das übertragbare Drehmoment erfassen.

Aufgabe der vorliegenden Erfindung ist es, einen Drehmomentsensor derart auszubilden, daß er eine kompakte Bauweise hat, vielseitig einsetzbar ist und eine hohe Meßgenauigkeit aufweist.

Diese Aufgabe wird dadurch gelöst, daß das Momentenübertragungselement einen die beiden Flansche verbindenden rohrförmigen Abschnitt aufweist.

Der erfindungsgemäße Drehmomentsensor nutzt die Vorteile beim Einsatz von Scherkraftmeßwertaufnehmern aus. Da die in Abhängigkeit des eingeleiteten Drehmomentes zu messenden Scherkräfte unabhängig von der axialen Baulänge des Drehmomentsensors sind, können derartige Drehmomentsensoren sehr kurzbauend ausgeführt sein und besitzen daher ein geringes Massenträgheitsmoment. Der Drehmomentsensor besitzt eine große Biegesteifigkeit, Längssteifigkeit und Drehsteifigkeit und kann insbesondere bei hohen Drehzahlen eingesetzt werden. Da die geschwächten mit Scherkraftmeßwertaufnehmern versehenen Bereiche in Bezug auf die gesamte Umfangsfläche des Momentenübertragungselementes sehr groß ausgebildet sein können, können mit einem derartigen Drehmomentsensor sehr große Momente eingeleitet und gemessen werden.

Ein weiterer Vorteil des erfindungsgemäßen Drehmomentsensors besteht darin, daß die Scherkraftmeßwertaufnehmer auf einer zu den Flanschen koaxialen Zylinderfläche angeordnet sind. Dadurch unterliegen alle Abschnitte der Dehnungsmeßstreifen der gleichen Zentrifugalkraft und es werden keine drehzahlbedingten Nullpunktverschiebungen mehr beobachtet.

In einer Weiterbildung des Erfindungsgedankens ist vorgesehen, daß die Dehnungsmeßstreifen nur auf der zur Drehachse gerichteten Mantelfläche des Kraftmeßfederelementes angeordnet sind.

Dies bietet den Vorteil, daß bei höheren Drehzahlen die Fliehkräfte die Dehnungsmeßstreifen zusätzlich auf ihre Unterlage pressen und so die Gefahr einer Ablösung von der Unterlage vermieden wird.

Weiterhin ist durch diese Ausbildung eine einfache Kapselung der Dehnungsmeßstreifen möglich, indem die beiden Flansche über geeignete stirnseitig angeordnete Deckelteile abgedeckt werden. Die auf der nach innen weisenden Mantelfläche angeordneten Dehnungsmeßstreifen sowie dazugehörige Elektronik sind dadurch auf einfache Weise hermetisch gekapselt und gegenüber Luftfeuchte, Schmutz, Ölnebel oder aggressiven Umgebungseinflüssen geschützt.

Wie bereits eingangs beschrieben erfolgt die Momenteneinleitung in den Drehmomentsensor über Anschlußflansche, die mit den Flanschen des Drehmomentsensors verbunden werden. Hierbei kann es bei Verschrauben der Anschlußflansche mit nicht exakt gleichen Anzugsmomenten oder aufgrund von Fertigungsungenauigkeiten der Anschlußbohrungen zu einer Verfälschung des Meßwertes führen. Um derartige Störgrößen zu eliminieren, sind bei einer bevorzugten Ausführungsform in den beiden Flanschen jeweils zwei radial versetzt gegenüberliegende stirnseitig eingebrachte ringförmige umlaufende Nuten vorgesehen. Zwischen den ringförmigen Nuten der Flansche wird dadurch jeweils ein gelenkartiger Abschnitt gebildet, so daß die Momenteneinleitung über die Verschraubung in die Flansche in das Momentenübertragungselement und somit in die Querschnittsbereiche, in denen die Dehnungsmeßstreifen angeordnet sind, entkoppelt wird.

Die Erfindung wird nachfolgend anhand von Ausführungsbeispielen näher erläutert, die in den Zeichnungen dargestellt sind.

Es zeigen:
- Fig. 1:: eine Ausführungsform eines Drehmomentsensors in perspektivischer Darstellung;
- Fig. 2:: einen Radialschnitt durch den Drehmomentsensor gemäß dem Schnitt III-III in Fig. 3;
- Fig. 3:: einen Axialschnitt durch den Drehmomentsensor gemäß dem Schnitt II-II in Fig. 2.
- Fig. 4:: eine weitere Ausführungsform eines Drehmomentsensors in einem Radialschnitt.

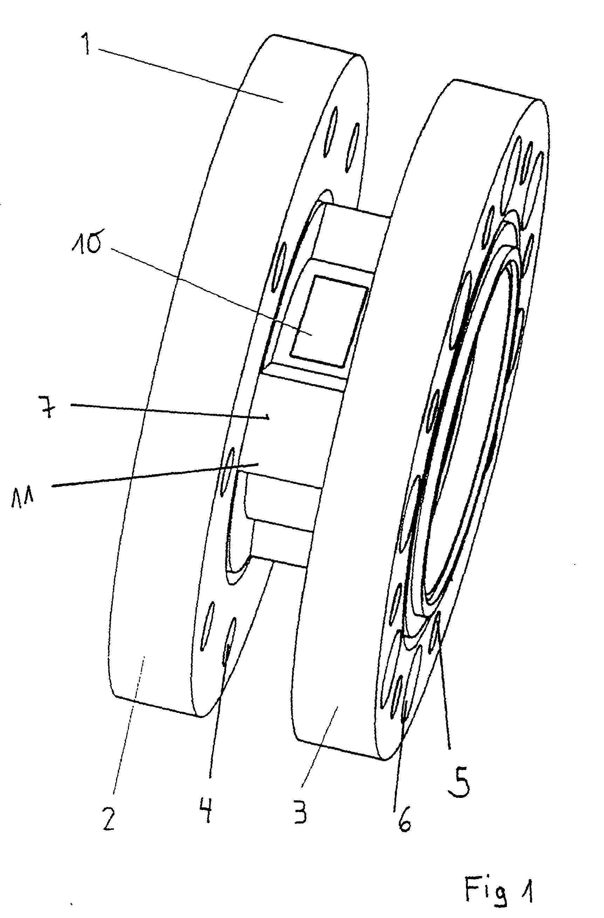

In den Figuren 1 bis 3 ist ein erfindungsgemäßer Drehmomentsensor 1 dargestellt, der einen ersten und einen zweiten Flansch 2, 3 zur Drehmomentein- bzw. -ausleitung aufweist. Der erste und der zweite Flansch 2, 3 sind voneinander beabstandet koaxial angeordnet und weisen den gleichen Durchmesser auf. Die Flansche 2, 3 können auch unterschiedliche Durchmesser aufweisen. Der erste sowie der zweite Flansch 2, 3 besitzen jeweils gleichmäßig am Umfang verteilte in die Stirnflächen der Flansche 2, 3 eingebrachte Anschlußbohrungen 4, 5, die der Verschraubung mit geeigneten, nicht dargestellten Anschlußflanschen zur Momenteneinleitung in den Drehmomentsensor 1 dienen. Die Anschlußbohrungen 4 des ersten Flansches 2 sind im Bezug auf die Anschlußbohrungen 5 des zweiten Flansches 3 tangential versetzt angeordnet. Die Anschlußbohrungen 5 sind mit Gewinde versehen. Zusätzlich sind in den zweiten Flansch 3 jeweils zwischen den Anschlußbohrungen 5 gleichmäßig über den Umfang verteilte weitere Durchgangsbohrungen 6 eingebracht, die jeweils im Bezug auf die Anschlußbohrungen 4 des ersten Flansches 2 fluchtend angeordnet sind. Durch die oben beschriebene Ausbildung des zweiten Flansches 3 mit zusätzlichen Durchgangsbohrungen 6 kann der Drehmomentsensor 1 problemlos aus einer Montagerichtung zwischen zwei Wellenenden eingebaut werden. Hierfür müssen die Durchgangsbohrungen 6 derart dimensioniert sein, daß die Schrauben zum Anschluß des ersten Flansches 2 durch die Durchgangsbohrungen 6 des zweiten Flansches 3 hindurchgeführt werden können. Des weiteren muß die Anzahl der Durchgangsbohrungen 6 entsprechend der Anzahl der Anschlußbohrungen 4 gewählt sein.

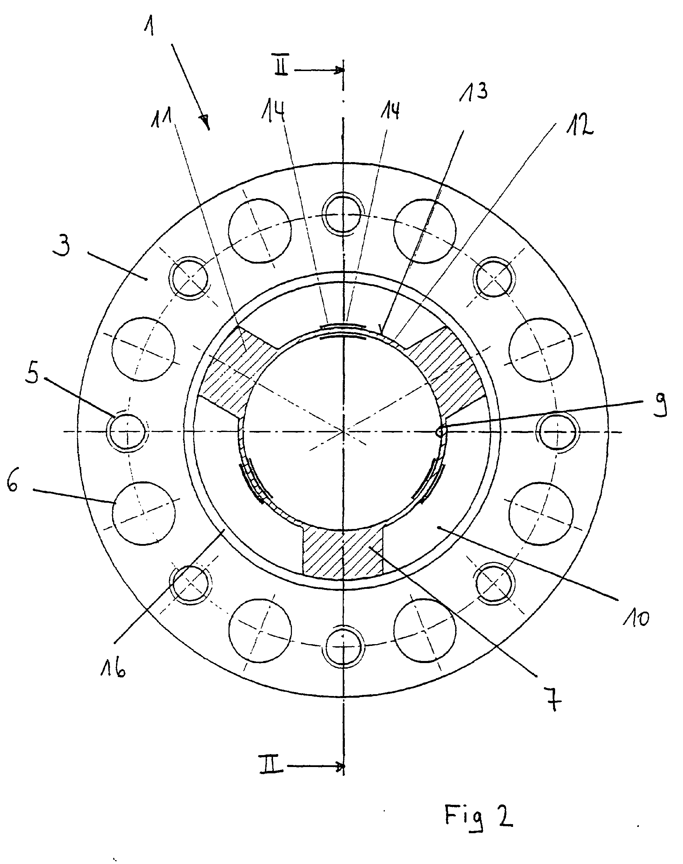

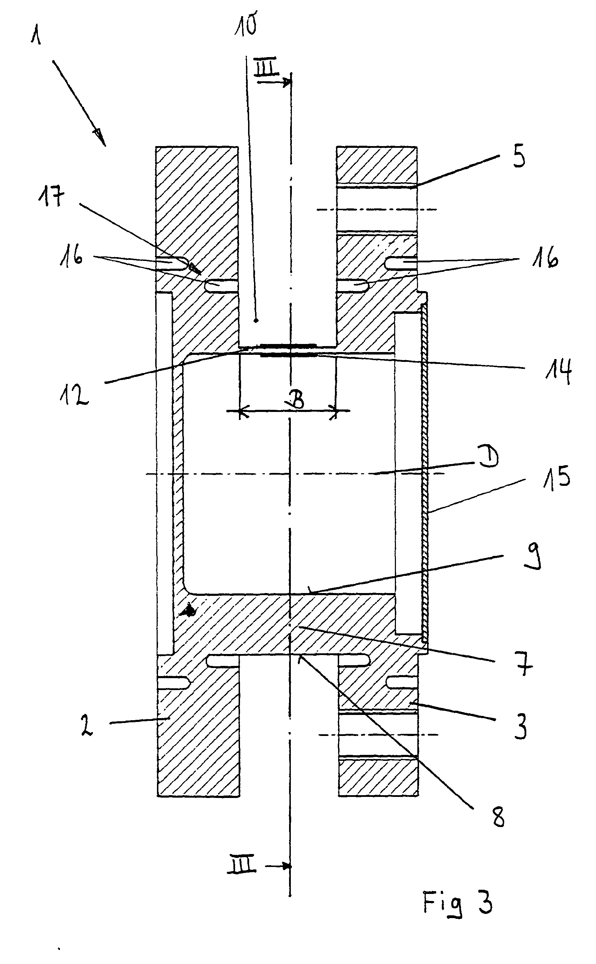

Der erste und zweite Flansch 2, 3 sind über ein koaxial zur Drehachse D angeordnetes ringförmiges Momentenübertragungselement 7 miteinander verbunden, wobei der erste und zweite Flansch 2, 3 sowie das Momentenübertragungselement 7 einstükkig ausgebildet sind. In das Momentenübertragungselement 7, das eine äußere Mantelfläche 8 sowie eine zur Drehachse D weisende innere Mantelfläche 9 aufweist, sind ausgehend von der äußeren Mantelfläche 8 gleichmäßig über den Umfang verteilt drei taschenförmige Ausnehmungen 10 eingebracht. Zwischen den taschenförmigen Ausnehmungen 10 verbleiben Versteifungsstege 11, die sternförmig radial nach außen gerichtet sind und einen im wesentlichen rechteckigen Querschnitt aufweisen. Wie es insbesondere aus der Fig. 3 ersichtlich ist, können sich die taschenförmigen Ausnehmungen 10 über die gesamte Breite B des Momentenübertragungselements 7 erstrecken, so daß in den Umfangsbereichen des Momentenübertragungselements 7, in denen die taschenförmigen Ausnehmungen 10 eingebracht sind, sehr dünne, die Flansche 2, 3 verbindende Kraftmeßfederelemente 12 verbleiben. Die taschenförmigen Ausnehmungen 10 können in axialer Richtung aber auch kleiner oder durch Hinterfräsung größer sein als die gesamte Breite B des Momentenübertragungselements 7. Wie es sehr deutlich in Fig. 2 ersichtlich ist, weist das Momentenübertragungselement 7 drei sternförmig nach außen weisende Versteifungsstege 11 auf, die durch die Kraftmeßfederelemente 12 als geschwächte Bereiche miteinander verbunden sind. Die Kraftmeßfederelemente 12 sind biegesteif. Durch diese Ausbildung weist das Momentenübertragungselement 7 einen geschlossenen rohrförmigen, die Flansche 2, 3 verbindenden Abschnitt auf.

Auf die zwischen den Versteifungsstegen 11 angeordneten Kraftmeßfederelemente 12 sind wie es aus Fig. 2 ersichtlich ist, auf ihren äußeren Mantelflächen 13 sowie auf ihren inneren Mantelflächen 9 jeweils Dehnungsmeßstreifen 14 appliziert, die bei der Drehmomenteinleitung zwischen den Flanschen 2, 3 auf Scherung beansprucht werden und daher Scherkraftmeßelemente bilden. Die Scherspannung läßt sich in an sich bekannter Weise am besten ermitteln, wenn die Dehnungsmeßstreifen 14 als Doppel-Dehnungsmeßstreifen mit in +/- 45°-Konfiguration angeordneten Meßgittern zu einer Längsachse des Kraftmeßfederelementes angeordnet sind. Die Längsachse des Kraftmeßfederelementes 12 liegt hierbei parallel zur Drehachse D.

In einer weiteren nicht dargestellten Ausführungsform kann vorgesehen sein, daß nur die zur Drehachse D gerichtete Mantelfläche 9 der Kraftmeßfederelemente 12 mit Dehnungsmeßstreifen 14, vorzugsweise als Doppel-Dehnungsmeßstreifen mit in +/-45°-Konfiguration angeordneten Meßgittern, appliziert sind. Wie in den Figuren 1 bis 3 ersichtlich ist, sind bei der oben beschriebenen Ausführungsbeispiel drei Kraftmeßfederelemente 12 sowie drei Versteifungsstege 11 vorgesehen. Der erfindungsgemäße Drehmomentsensor 1 kann jedoch auch mit einer anderen Anzahl von Versteifungsstegen sowie dazwischen liegenden Kraftmeßfederelementen ausgebildet sein. Die Versteifungsstege bewirken bei dem erfindunggemäßen Drehmomentsensor 1 eine große Biegesteifigkeit und eine hohe Längssteifigkeit.

In einer bevorzugten nicht dargestellten Ausführungsform sind acht taschenförmige Ausnehmungen in das Momentenübertragungselement eingebracht, d. h. es werden acht Versteifungsstege sowie acht zwischen den Versteifungsstegen angeordnete Kraftmeßfederelemente gebildet. Bei der oben beschriebenen Ausführungsform, bei der nur auf der zur Drehachse D weisenden Mantelfläche 9 der Kraftmeßfederelemente die Dehnungsmeßstreifen 14 appliziert sind, kann wie es in Fig. 3 dargestellt ist, stirnseitig an dem zweiten Flansch 3 ein scheibenförmiges Dekkelteil 15 angeordnet sein. Der erste Flansch 2 ist als geschlossenes scheibenförmiges Teil ausgebildet, so daß die Dehnungsmeßstreifen sowie dazugehörige Elektronik, die zeichnerisch nicht dargestellt ist, auf einfache Weise hermetisch gekapselt sind.

In den beiden Flanschen 2, 3 sind jeweils zwei radial versetzt gegenüberliegende stirnseitig eingebrachte ringförmige umlaufende Nuten 16 vorgesehen. Zwischen den ringförmigen Nuten 16 der Flansche 2, 3 wird dadurch jeweils ein gelenkartiger Abschnitt 17 gebildet, so daß die Momenteneinleitung über die Verschraubung in die Flansche 2, 3 in das Momentenübertragungselement 7 und somit in die Querschnittsbereiche, in denen die Dehnungsmeßstreifen 14 angeordnet sind, entkoppelt wird. Anstelle der Verwendung von Dehnungsmeßstreifen als Wandlerelemente können auch andere bekannte Wandlerelemente eingesetzt werden.

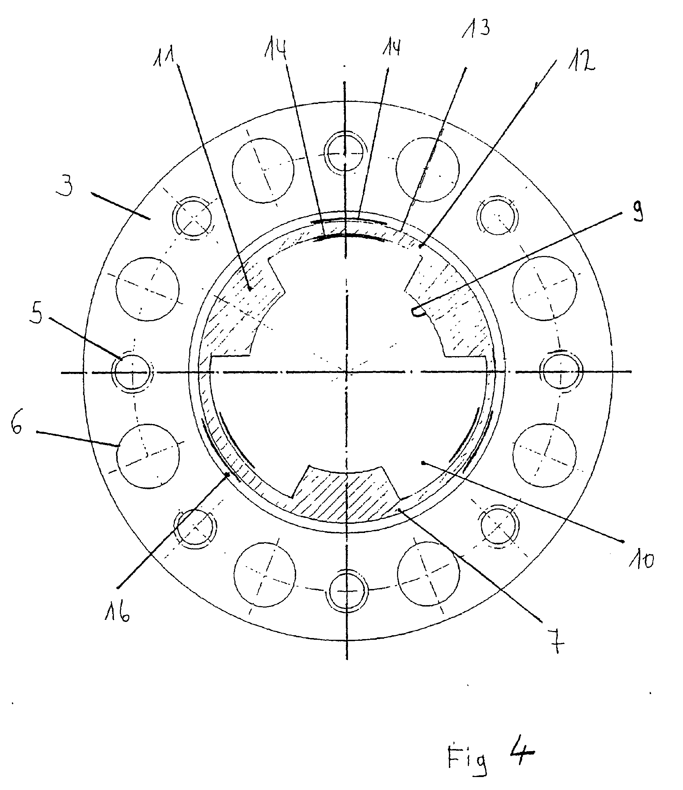

In einer weiteren in Fig. 4 dargestellten Ausführungsform des erfindungsgemäßen Drehmomentsensors 1 sind ausgehend von der inneren Mantelfläche 9 des Rings 7 gleichmäßig über den Umfang verteilte taschenförmige Ausnehmungen 10 eingebracht. Zwischen den taschenförmigen Ausnehmungen 10 verbleiben Versteifungsstege 11. In den Umfangsbereichen des momentenübertragungselementes 7, in denen die taschenförmigen Ausnehmungen 10 eingebracht sind, verbleiben Kraftmeßfederelemente 12. Gleiche Bezugszeichen entsprechen gleichen, bereits zu den vorangehenden Figuren beschriebenen Teilen. Auch eine Kombination aus den Ausführungsbeispielen nach Fig. 2 und Fig. 4 der Zeichnung ist möglich, wobei die taschenförmigen Ausnehmungen 10 gegenüberliegend angeordnet sind und ein H-Profil bilden. Es sind auch radial abwechselnde Ausnehmungen möglich, die jeweils von der inneren und nachfolgend von der äußeren Mantelfläche ausgehen.

Der erfindungsgemäße Drehmomentsensor kann für alle zu messenden Drehmomente ausgelegt und mit allen bekannten Brückenschaltungen ausgestattet werden. Der Drehmomentsensor kann sowohl bei der Ermittlung von statischen als auch von dynamischen Drehmomenten sowohl an drehenden als auch an stehenden Wellen eingesetzt werden.

## Patentansprüche

1. Drehmomentsensor mit einem ersten und einem zweiten axial voneinander beabstandeten Flansch (2, 3) die über ein Momentenübertragungselement (7) miteinander verbunden sind, wobei das Momentenübertragungselement (7) geschwächte Bereiche (12) aufweist, die wenigstens eine gemeinsame zu den Flanschen koaxiale Mantelfläche (9) besitzen, wobei auf dieser Mantelfläche (9) Scherkraftmeßwertaufnehmer (14) angeordnet sind und das Momentenübertragungselement (7) einen geschlossenen, die Flansche (2, 3) verbindenden rohrförmigen Abschnitt aufweist, **dadurch gekennzeichnet, dass** die geschwächten Bereiche als Kraftmeßfederelemente (12) ausgebildet sind, die über in die äußere oder innere Mantelfläche des Momentenübertragungselementes (7) eingebrachte taschenförmige Ausnehmungen (10) gebildet werden, und daß zwischen den taschenförmigen Ausnehmungen (10) Versteifungsstege (11) verbleiben.

2. Drehmomentsensor nach Anspruch 1, **dadurch gekennzeichnet, dass** die Scherkraftmeßwertaufnehmer (14) auf der nach innen weisenden Mantelfläche (9) der Kraftmeßfederelemente(12) angeordnet sind.

3. Drehmomentsensor nach Anspruch 1 oder 2, **dadurch gekennzeichnet, dass** die Flansche (2, 3) jeweils stirnseitig über Deckelteile abgedeckt werden.

4. Drehmomentsensor nach einem der vorhergehenden Ansprüche, **dadurch gekennzeichnet, dass** die Flansche (2, 3) sowie das Momentenübertragungselement (7) einstückig ausgebildet sind.

5. Drehmomentsensor nach einem der vorhergehenden Ansprüche, **dadurch gekennzeichnet, dass** die Flansche (2, 3) jeweils zwei radial versetzt gegenüberliegende stirnseitig eingebrachte ringförmig umlaufende Nuten (16) aufweisen.

6. Drehmomentsensor nach einem der vorhergehenden Ansprüche, **dadurch gekennzeichnet, dass** der erste sowie zweite Flansch (2, 3) jeweils Anschlußbohrungen (4, 5) aufweisen, die gegeneinander tangential versetzt angeordnet sind und der zweite Flansch (3) zusätzlich Durchgangsbohrungen (6) aufweist, die mit den Anschlußbohrungen (4) des ersten Flansches (2) fluchtend angeordnet sind.

## Claims

1. Torque sensor with a first and a second flange (2, 3) which are axially spaced apart from one another and are connected to one another by a torque transmission element (7), wherein the torque transmission element (7) has weakened regions (12), which have at least one common lateral surface (9) that is coaxial to the flanges, shear force measured value sensors (14) being arranged on this lateral surface and the torque transmission element (7) having a closed tubular portion connecting the flanges (2, 3), **characterised in that** the weakened regions are configured as force measurement spring elements (12), which are formed by means of pocket-shaped recesses (10) introduced into the outer or inner lateral surface of the force transmission element (7), and **in that** reinforcement webs (11) remain between the pocket-shaped recesses (10).

2. Torque sensor according to claim 1, **characterised in that** the shear force measured value sensors (14) are arranged on the inwardly directed lateral surface (9) of the force measurement spring elements (12).

3. Torque sensor according to claim 1 or 2, **characterised in that** the flanges (2, 3) are in each case covered on the end face by cover parts.

4. Torque sensor according to any one of the preceding claims, **characterised in that** the flanges (2, 3) and the torque transmission element (7) are configured in one piece.

5. Torque sensor according to any one of the preceding claims, **characterised in that** the flanges (2, 3) in each case have two radially offset opposing annular peripheral grooves (16) introduced on the end face.

6. Torque sensor according to any one of the preceding claims, **characterised in that** the first and second flange (2, 3) in each case have connection bores (4, 5), which are arranged tangentially offset with respect to one another and the second flange (3) additionally has through-bores (6), which are arranged aligned with the connection bores (4) of the first flange (2).

## Revendications

1. Capteur de couple avec une première et une deuxième joue (2, 3), écartées l'une de l'autre dans le sens axial et reliées l'une à l'autre par un élément de transmission de couple (7), ledit élément de transmission de couple (7) comportant des zones (12) affaiblies, qui possèdent au moins une surface latérale (9) commune, coaxiale aux joues, des transducteurs d'efforts de cisaillement (14) étant agencés sur ladite surface latérale (9) et l'élément de transmission de couple (7) comportant une partie tubulaire fermée, reliant les joues (2, 3), **caractérisé en ce que** les zones affaiblies sont réalisées sous forme d'éléments de ressort dynamométriques (12), qui sont formés par des évidements (10) en forme de poche, ménagés dans la surface latérale extérieure ou intérieure de l'élément de transmission de couple (7), et **en ce que** des nervures de raidissement (11) subsistent entre les évidements (10) en forme de poche.

2. Capteur de couple selon la revendication 1, **caractérisé en ce que** les transducteurs d'efforts de cisaillement (14) sont agencés sur la surface latérale (9), orientée vers l'intérieur, des éléments de ressort dynamométriques (12).

3. Capteur de couple selon la revendication 1 ou 2, **caractérisé en ce que** les joues (2, 3) sont protégées chacune sur le côté frontal par des éléments en forme de couvercle.

4. Capteur de couple selon l'une des revendications précédentes, **caractérisé en ce que** les joues (2, 3), ainsi que l'élément de transmission de couple (7) sont réalisés d'un seul tenant.

5. Capteur de couple selon l'une des revendications précédentes, **caractérisé en ce que** les joues (2, 3) comportent chacune deux rainures (16) périphériques annulaires, ménagées sur les faces frontales opposées en étant décalées dans le sens radial.

6. Capteur de couple selon l'une des revendications précédentes, **caractérisé en ce que** la première, de même que la deuxième joue (2, 3) comportent chacune des forures de raccordement (4, 5), qui sont agencées en étant décalées tangentiellement les unes aux autres, et la deuxième joue (3) comporte en plus des forures débouchantes (6), qui sont disposées alignées avec les forures de raccordement (4) de la première joue (2).
